# EUROPEAN PATENT SPECIFICATION

(11) **EP 4 307 460 B1**
(45) Date of publication and mention of the grant of the patent: **04.02.2026**
(21) Application number: 23783288.6
(22) Date of filing: 08.03.2023
(51) Int. Cl.: H01M 50/531, H01M 50/533, H01M 50/534, H01M 50/54, H01M 50/105, H01M 50/178, H01M 50/211, H01M 50/553, H01M 50/579, H01M 50/593, H01M 50/55, H01M 50/557, H01M 50/595

(54) **BATTERY CELL INCLUDING ELECTRODE TAB HAVING BREAKAGE PREVENTION FUNCTION AND BATTERY MODULE INCLUDING THE SAME**
BATTERIEZELLE MIT ELEKTRODENLASCHE MIT TRENNUNGSVERHINDERUNGSFUNKTION UND BATTERIEMODUL DAMIT
ÉLÉMENT DE BATTERIE COMPRENANT UNE LANGUETTE D'ÉLECTRODE À FONCTION DE PRÉVENTION DE DÉCONNEXION, ET MODULE DE BATTERIE LE COMPRENANT

(30) Priority: 15.04.2022 KR 20220047082
(43) Date of publication of application: 17.01.2024
(73) Proprietor: LG ENERGY SOLUTION, LTD., Seoul 07335 (KR)
(72) Inventor: YUN, Su Hyun, Yuseong-Gu Daejeon 34122 (KR); JUNG, Bum Young, Yuseong-Gu Daejeon 34122 (KR); AN, Hyo Sun, Yuseong-Gu Daejeon 34122 (KR)
(74) Representative: Plasseraud IP
(86) International application number: PCT/KR2023/003151
(87) International publication number: WO 2023/200117

(56) References cited:
- JP-A- 2004 087 300
- JP-A- 2011 181 491
- JP-A- 2011 181 491
- KR-A- 20130 039 900
- KR-A- 20130 039 900
- KR-A- 20180 026 946
- KR-A- 20190 067 312
- KR-A- 20190 067 312
- US-A1- 2018 062 146
- US-A1- 2021 119 304

## Description

### [Technical Field]

This application claims the benefit of priority to Korean Patent Application No. 2022-0047082 filed on April 15, 2022.

The present invention relates to a battery cell including an electrode tab having a breakage prevention function and a battery module including the same, and more particularly to a battery cell including an electrode tab having a breakage prevention function capable of preventing breakage of the electrode tab due to movement of an electrode assembly or external impact applied to the electrode assembly as the result of the electrode tab having the breakage prevention function and a battery module including the same.

### [Background Art]

With recent development of alternative energies due to air pollution and energy depletion caused as the result of use of fossil fuels, demand for secondary batteries capable of storing electrical energy that is produced has increased. The secondary batteries, which are capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, battery cells are used in electric vehicles or smartphones. As the result of movement of a battery cell caused by external impact or swelling of the battery cell occurring during charging and discharging, tension is applied between an electrode tab and an electrode lead, whereby the electrode tab and the electrode lead may be broken.

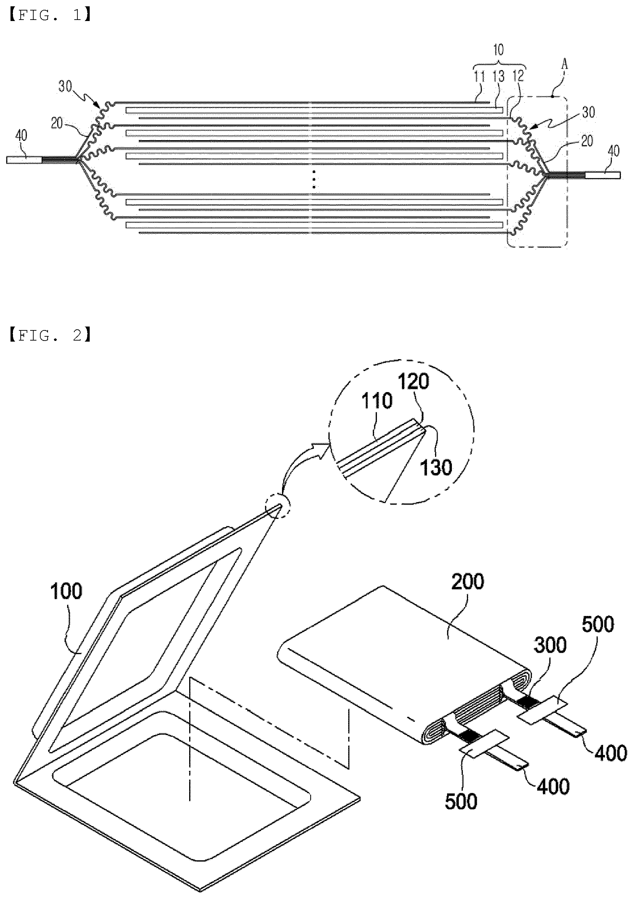

FIG. 1 is a sectional view of a conventional battery cell. As shown in FIG. 1, the conventional battery cell includes an electrode assembly 10, an electrode tab 20 extending from one side of the electrode assembly 10, a buffer portion 30 formed at the electrode tab 20, and an electrode lead 40 having one side connected to the electrode tab 20 and the other side projecting out of a case.

The conventional battery cell is configured such that, when tension is applied to the electrode tab 20 due to swelling, etc., the bent buffer portion 30 provided at the electrode tab 20 is relaxed to reduce the tension, whereby breakage of the electrode tab 20 is prevented.

Since the buffer portion 30 of the electrode tab 20 is bent, however, the volume of the battery cell is increased, whereby energy density of the battery cell is reduced.

Furthermore, since the overall length of the electrode tab 20 is increased, resistance is increased and manufacturing cost is increased.

### (Prior Art Document)

(Patent Document 1) Korean Patent Application Publication No. 2019-0067312
(Patent Document 2) US2018062146A1

### [Disclosure]

### [Technical Problem]

The present invention has been made in view of the above problems, and it is an object of the present invention to provide a battery cell configured such that breakage of an electrode tab and an electrode lead is prevented even when an electrode assembly moves or swells due to external vibration or impact and a battery module including the same.

It is another object of the present invention to provide a battery cell configured such that breakage of an electrode tab and an electrode lead is prevented without increase in volume of the battery cell and without increase in material cost and a battery module including the same.

### [Technical Solution]

In order to accomplish the above objects, a battery cell including an electrode tab having a breakage prevention function according to the present invention includes a case (100) having a laminate sheet structure, an electrode assembly (200) received in the case (100), an electrode tab (300) located at a side surface of the electrode assembly (200), an electrode lead (400) having one side connected to the electrode tab (300) and the other side projecting out of the case (100), and insulative films (500) disposed at each of an upper surface and a lower surface of the electrode lead (400), wherein the electrode tab (300) includes a buffer portion (310) thereof, the length of the buffer portion being adjustable.

Also, in the battery cell according to the present invention, the buffer portion (310) may be located between a connection portion (W) of the electrode tab (300) and the electrode assembly (200).

Also, in the battery cell according to the present invention, the buffer portion (310) may have a plurality of first zigzag break lines (311) formed in a longitudinal direction of the electrode tab (300).

Also, in the battery cell according to the present invention, the buffer portion (310) may have a plurality of first wavy break lines (311) formed in the longitudinal direction of the electrode tab (300).

Also, in the battery cell according to the present invention, the buffer portion (310) may have a plurality of zigzag incision lines (313) formed in the longitudinal direction of the electrode tab (300).

Also, in the battery cell according to the present invention, the buffer portion (310) may have a plurality of wavy incision lines (313) formed in the longitudinal direction of the electrode tab (300).

Also, in the battery cell according to the present invention, the buffer portion may have two second break lines (312) disposed at each of opposite edges of the buffer portion (310), respectively, in a lateral direction of the buffer portion.

Also, in the battery cell according to the present invention, the buffer portion (310) may be configured such that a part of each of the opposite edges of the buffer portion in the lateral direction thereof is incised in a zigzag shape and such that a plurality of first zigzag break lines (311) is formed in the longitudinal direction of the electrode tab (300).

Also, in the battery cell according to the present invention, the buffer portion (310) may be configured such that a part of each of the opposite edges of the buffer portion in the lateral direction thereof is incised in a wavy shape and such that a plurality of first wavy break lines (311) is formed in the longitudinal direction of the electrode tab (300).

Also, in the battery cell according to the present invention, the buffer portion (310) may be configured such that a part of each of the opposite edges of the buffer portion in the lateral direction thereof is incised in a zigzag shape and such that a plurality of zigzag incision lines (313) is formed in the longitudinal direction of the electrode tab (300).

Also, in the battery cell according to the present invention, the buffer portion (310) may be configured such that a part of each of the opposite edges of the buffer portion in the lateral direction thereof is incised in a wavy shape and such that a plurality of wavy incision lines

(313) is formed in the longitudinal direction of the electrode tab (300).

Also, in the battery cell according to the present invention, the buffer portion (310) may not overlap the insulative film (500) on a vertical line.

In addition, the present invention provides a battery module including the battery cell having the above features.

In addition, the present invention provides a battery pack including the battery module.

### [Advantageous Effects]

As is apparent from the above description, a battery cell according to the present invention has an advantage in that a part of an electrode tab is provided with a buffer portion constituted by a break line or an incision line, whereby it is possible to prevent breakage of the electrode tab and an electrode lead even when an electrode assembly moves or swells.

In addition, the battery cell according to the present invention has a merit in that, since the buffer portion is constituted by the break line or the incision line, the volume of the battery cell is not increased, whereby it is possible to prevent decrease in energy density.

Furthermore, the battery cell according to the present invention has an advantage in that, since the buffer portion is constituted by the break line or the incision line, the length of the electrode tab is not increased, whereby it is possible to inhibit increase in material cost.

### [Description of Drawings]

FIG. 1 is a sectional view of a conventional battery cell.
FIG. 2 is an exploded perspective view of a battery cell according to a first preferred embodiment of the present invention.
FIG. 3 is an enlarged perspective view of an electrode tab according to a first preferred embodiment of the present invention.
FIG. 4 is an enlarged perspective view of an electrode tab according to a second preferred embodiment of the present invention.
FIG. 5 is an enlarged perspective view of an electrode tab according to a third preferred embodiment of the present invention.
FIG. 6 is an enlarged perspective view of an electrode tab according to a fourth preferred embodiment of the present invention.
FIG. 7 is an enlarged perspective view of an electrode tab according to a fifth preferred embodiment of the present invention.
FIG. 8 is an enlarged perspective view of an electrode tab according to a sixth preferred embodiment of the present invention.
FIG. 9 is an enlarged perspective view of an electrode tab according to a seventh preferred embodiment of the present invention.
FIG. 10 is an enlarged perspective view of an electrode tab according to an eighth preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell including an electrode tab having a breakage prevention function according to the present invention and a battery module including the same will be described with reference to the accompanying drawings.

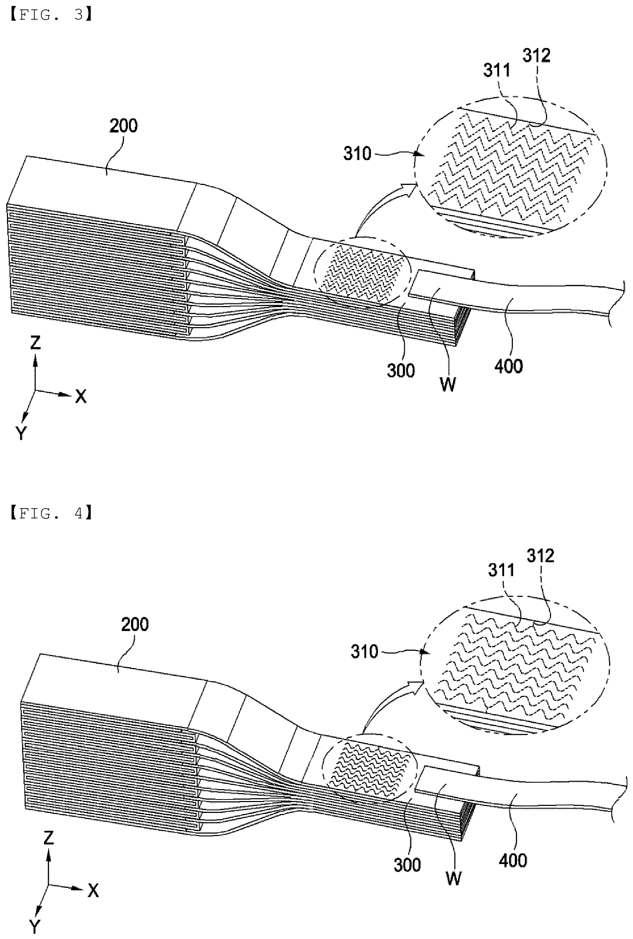

FIG. 2 is an exploded perspective view of a battery cell according to a first preferred embodiment of the present invention, and FIG. 3 is an enlarged perspective view of an electrode tab according to a first preferred embodiment of the present invention.

As shown in FIGs. 2 and 3, the battery cell according to the present invention includes a cell case 100, an electrode assembly 200, an electrode tab 300, an electrode lead 400, and an insulative film 500.

First, the case 100 may be constituted by an upper case and a lower case, and have a pocket type receiving portion configured to receive the electrode assembly 200.

In the case 100, the receiving portion is formed using a laminate sheet constituted by an outer resin layer 110, a metal layer 120, and an inner resin layer 130.

The outer resin layer 110 is located at an outer side of the case 100, and the outer resin layer 110 may be made of a heat-resistant polymer that exhibits excellent tensile strength, resistance to moisture permeation, and resistance to air transmission such that the outer resin layer exhibits high heat resistance and chemical resistance while protecting the electrode assembly 200. As an example, the outer resin layer may be made of nylon or polyethylene terephthalate; however, the present invention is not limited thereto.

The metal layer 120, which abuts the outer resin layer 110, corresponds to a barrier layer configured to prevent moisture or various kinds of gas from permeating into the battery from the outside. An aluminum thin film, which is lightweight and easily shapeable, may be used as a preferred material for the metal layer.

The inner resin layer 130 is disposed in direct contact with the electrode assembly 200, and therefore the inner resin layer must exhibit high insulation properties and high resistance to an electrolytic solution. In addition, the inner resin layer must exhibit high sealability in order to hermetically isolate the case from the outside, i.e. a thermally-bonded sealed portion between inner layers must exhibit excellent thermal bonding strength.

The inner resin layer 130 may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The electrode assembly 200, which is received in the case 100, may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode is manufactured by applying a slurry mixture of a negative electrode active material and a binder to a negative electrode current collector.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode is manufactured by applying a slurry mixture of a positive electrode active material and a binder to a positive electrode current collector.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a portion to which the slurry including the active material is applied and an uncoated portion to which no slurry is applied. The uncoated portion is cut or a separate conductive member is connected to the uncoated portion by ultrasonic welding to form the electrode tab 300.

The electrode lead 400 is connected to the electrode tab 300 by spot welding, and the insulative film 500 is located around the electrode lead 400.

In order to minimize tension transmitted to the electrode tab 300 even when the electrode assembly moves or swells due to external impact applied thereto, the electrode tab 300 is provided with a buffer portion 310, the length of which is adjustable.

The buffer portion 310 is located between a connection portion W with the electrode tab 300 and the electrode assembly 200. It is preferable for the buffer portion not to overlap the insulative film 500 on a vertical line, i.e. it is preferable for the insulative film 500 not to be located above or under the buffer portion 310. The reason for this is that, if the buffer portion 310 and the insulative film 500 are disposed so as to overlap each other, the buffer portion 310 is not appropriately stretched even through tension is applied to the electrode tab 300 due to a swelling phenomenon, whereby it is not possible to sufficiently achieve a breakage inhibition effect.

The buffer portion 310 will be described in more detail. The buffer portion 310 is configured such that a part of the buffer portion is broken or relaxed when tension is applied to the electrode tab 300, thereby reducing the tension. A plurality of first zigzag break lines 311 may be formed.

Each of the first zigzag break lines 311 is configured to have a dotted pattern in which a part of the first zigzag break line is incised in a longitudinal direction of the electrode tab 300 (X-axis direction), i.e. a part of the first zigzag break line is cut at predetermined intervals. When tension is applied to the electrode tab 300 due to movement or swelling of the electrode assembly 200, an uncut part of the first zigzag break line 311 is broken, whereby the buffer portion 310 is relaxed, and therefore complete breakage of the electrode tab 300 is prevented.

In addition, it is preferable for the buffer portion 310 to further have a second break line 312 provided at each of opposite edges of the buffer portion 310 in a lateral direction thereof (Y-axis direction).

The second break line 312 may be configured to have a dotted pattern in which a part of the second break line is incised, in the same manner as the first break line 311. It is preferable for the second break line to be provided at the first break line 311 located at each of the outermost ones of the plurality of first zigzag break lines 311, and it is more preferable for the second break line to be provided at a part that is maximally adjacent to each of opposite edges of the electrode tab 300.

At ordinary times, the second break line 312 protects the electrode tab 300 such that the electrode tab is not broken. When tension is applied to the electrode tab 300, opposite edge parts of the buffer portion 310 are broken such that the first break lines 311 can be easily stretched.

The insulative film 500 is located in a sealed portion at which the lower case and the upper case are thermally bonded, more specifically above and under the connection portion W between the electrode tab 300 and the electrode lead 400, to prevent short circuit.

Here, it is preferable for the insulative film 500 to be made of a nonconductive material that hardly transmits electricity. In general, an insulative tape that is easily attached to the electrode lead 400 and has a relatively small thickness is mainly used; however, the present invention is not limited thereto.

Specifically, the insulative film 500 may be made of at least one material selected from the group consisting of polyimide (PI), polypropylene (PP), polyethylene (PE), polyethylene terephthalate (PET), polyvinyl chloride (PVC), high density polyethylene (HDPE), and an epoxy resin.

FIG. 4 is an enlarged perspective view of an electrode tab according to a second preferred embodiment of the present invention. Referring to FIG. 4, the battery cell according to the second embodiment of the present invention is identical to the battery cell according to the first embodiment described with reference to FIGs. 2 and 3 except for the shape of a buffer portion 310, and therefore a description of the same construction will be omitted.

In the battery cell according to the second preferred embodiment of the present invention, each first break line 311 of the buffer portion 310 has a wavy shape.

In addition, it is preferable for a second break line 312 to be provided at the first break line 311 located at each of the outermost ones of the plurality of first wavy break lines 311, and it is more preferable for the second break line to be provided so as to be connected to each of opposite edges of the electrode tab 300 at a part that is maximally adjacent to each of the opposite edges of the electrode tab 300.

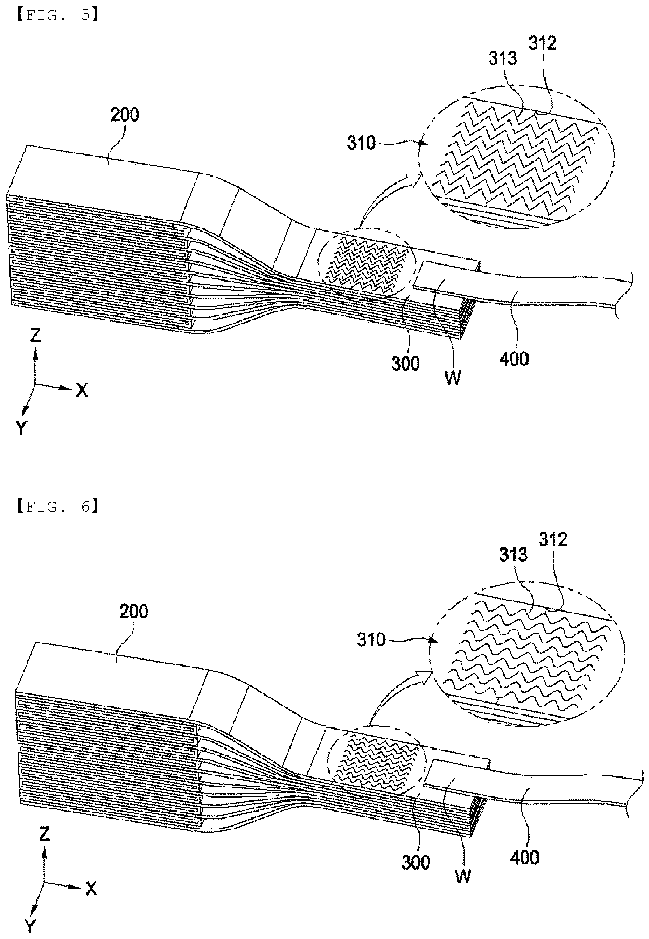

FIG. 5 is an enlarged perspective view of an electrode tab according to a third preferred embodiment of the present invention. Referring to FIG. 5, the battery cell according to the third preferred embodiment of the present invention is identical to the battery cell according to the first embodiment described with reference to FIGs. 2 and 3 except for the shape of a buffer portion 310, and therefore a description of the same construction will be omitted.

In the battery cell according to the third preferred embodiment of the present invention, the buffer portion 310 is provided with a plurality of zigzag incision lines 313 that is completely cut. In addition, a second break line 312 is provided at the incision line 313 located at each of the outermost ones of the plurality of incision lines 313.

Consequently, the battery cell according to the third embodiment has an advantage in that, when tension is applied to the electrode tab 300, the second break line 312 is broken, whereby the buffer portion is more rapidly relaxed.

FIG. 6 is an enlarged perspective view of an electrode tab according to a fourth preferred embodiment of the present invention. Referring to FIG. 6, the battery cell according to the fourth preferred embodiment of the present invention is identical to the battery cell according to the first embodiment described with reference to FIGs. 2 and 3 except for the shape of a buffer portion 310, and therefore a description of the same construction will be omitted.

In the battery cell according to the fourth preferred embodiment of the present invention, the buffer portion 310 is provided with a plurality of wavy incision lines 313 that is completely cut. In addition, a second break line 312 is provided at the incision line 313 located at each of the outermost ones of the plurality of incision lines 313.

Consequently, the battery cell according to the fourth embodiment has an advantage in that, when tension is applied to the electrode tab 300, the second break line 312 is broken, whereby the buffer portion is more rapidly relaxed.

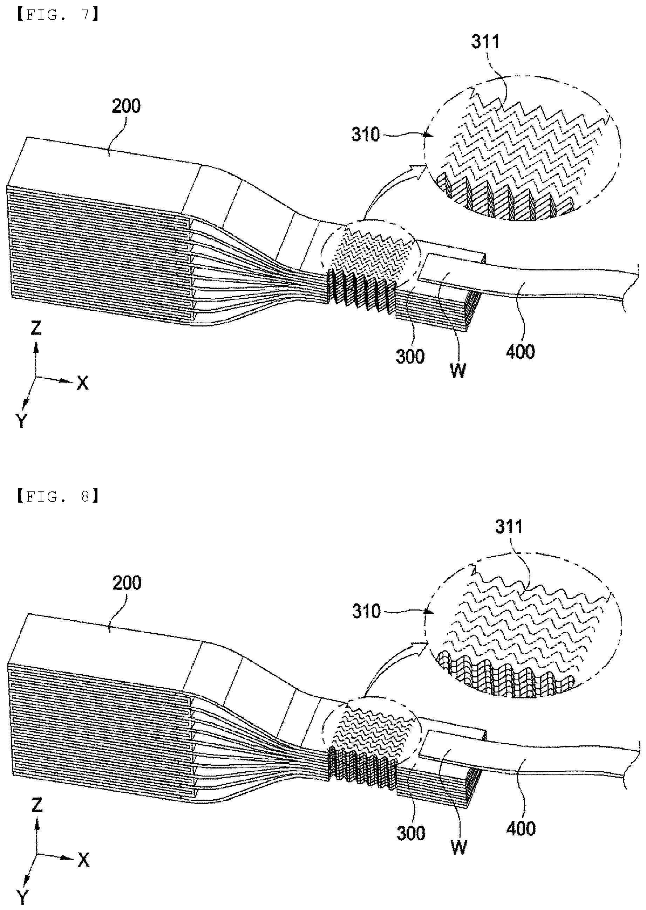

FIG. 7 is an enlarged perspective view of an electrode tab according to a fifth preferred embodiment of the present invention. Referring to FIG. 7, the battery cell according to the fifth preferred embodiment of the present invention is identical to the battery cell according to the first embodiment described with reference to FIGs. 2 and 3 except for the shape of a buffer portion 310, and therefore a description of the same construction will be omitted.

In the battery cell according to the fifth preferred embodiment of the present invention, the buffer portion 310 is configured such that a part of each of opposite edges of the buffer portion 310 in the lateral direction thereof (Y-axis direction) is incised in a zigzag shape and such that a plurality of first zigzag break lines 311 is formed in the longitudinal direction of the electrode tab 300 (X-axis direction).

FIG. 8 is an enlarged perspective view of an electrode tab according to a sixth preferred embodiment of the present invention. Referring to FIG. 8, the battery cell according to the sixth preferred embodiment of the present invention is identical to the battery cell according to the first embodiment described with reference to FIGs. 2 and 3 except for the shape of a buffer portion 310, and therefore a description of the same construction will be omitted.

In the battery cell according to the sixth preferred embodiment of the present invention, the buffer portion 310 is configured such that a part of each of opposite edges of the buffer portion 310 in the lateral direction thereof (Y-axis direction) is incised in a wavy shape and such that a plurality of first wavy break lines 311 is formed in the longitudinal direction of the electrode tab 300 (X-axis direction).

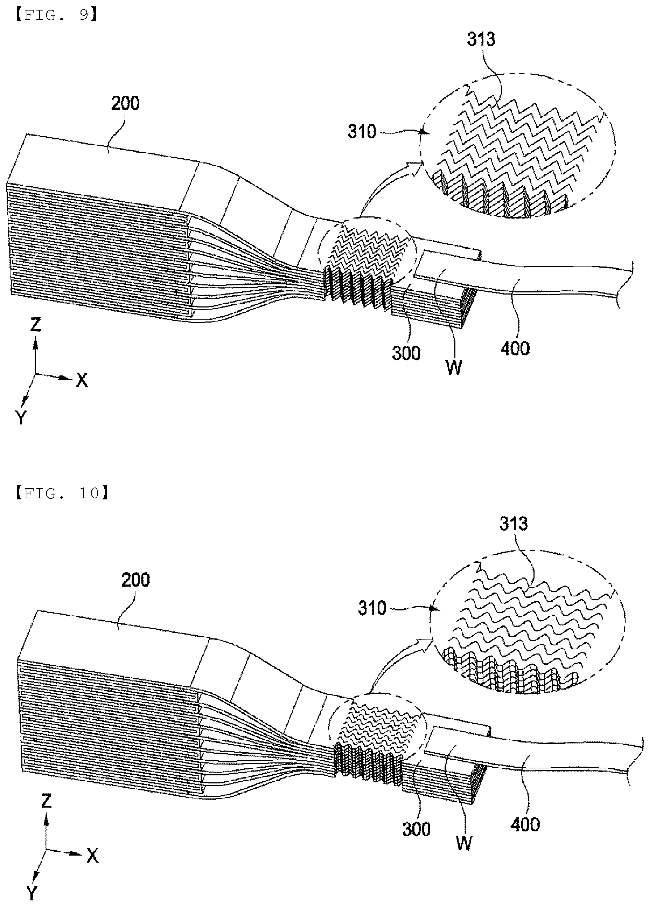

FIG. 9 is an enlarged perspective view of an electrode tab according to a seventh preferred embodiment of the present invention. Referring to FIG. 9, the battery cell according to the seventh preferred embodiment of the present invention is identical to the battery cell according to the first embodiment described with reference to FIGs. 2 and 3 except for the shape of a buffer portion 310, and therefore a description of the same construction will be omitted.

In the battery cell according to the seventh preferred embodiment of the present invention, the buffer portion 310 is configured such that a part of each of opposite edges of the buffer portion 310 in the lateral direction thereof (Y-axis direction) is incised in a zigzag shape and such that a plurality of zigzag incision lines 313 is formed in the longitudinal direction of the electrode tab 300 (X-axis direction).

As described above, the buffer portion 310 according to the seventh embodiment is constituted by only the plurality of incision lines 313. When tension is applied to the electrode tab 300, therefore, the electrode tab may be very rapidly stretched.

FIG. 10 is an enlarged perspective view of an electrode tab according to an eighth preferred embodiment of the present invention. Referring to FIG. 10, the battery cell according to the eighth preferred embodiment of the present invention is identical to battery cell according to the first embodiment described with reference to FIGs. 2 and 3 except for the shape of a buffer portion 310, and therefore a description of the same construction will be omitted.

In the battery cell according to the eighth preferred embodiment of the present invention, the buffer portion 310 is configured such that a part of each of opposite edges of the buffer portion 310 in the lateral direction thereof (Y-axis direction) is incised in a wavy shape and such that a plurality of wavy incision lines 313 is formed in the longitudinal direction of the electrode tab 300 (X-axis direction).

As described above, the buffer portion 310 according to the eighth embodiment is constituted by only the plurality of incision lines 313. When tension is applied to the electrode tab 300, therefore, the electrode tab may be very rapidly stretched.

In addition, the present invention may provide a battery module including the battery cell and a battery pack including the battery module.

### (Description of Reference Symbols)

- 100:: Case
- 110:: Outer resin layer
- 120:: Metal layer
- 130:: Inner resin layer
- 200:: Electrode assembly
- 300:: Electrode tab
- 310:: Buffer portion
- 311:: First break line
- 312:: Second break line
- 313:: Incision line
- 400:: Electrode lead
- 500:: Insulative film
- W:: Connection portion

## Claims

1. A battery cell comprising:
a case (100) having a laminate sheet structure;
an electrode assembly (200) received in the case (100);
an electrode tab (300) located at a side surface of the electrode assembly(200);
an electrode lead (400) having one side connected to the electrode tab (300) and the other side projecting out of the case (100); and
insulative films (500) disposed at each of an upper surface and a lower surface of the electrode lead (400),
wherein the electrode tab (300) includes a buffer portion (310) thereof, a length of the buffer portion being adjustable, wherein the buffer portion (310) is located between a connection portion (W) of the electrode tab (300) and the electrode assembly (200),
**characterized in that**
the buffer portion (310) has :
- a plurality of first zigzag break lines (311) formed in a longitudinal direction of the electrode tab (300), or
- a plurality of first wavy break lines (311) formed in a longitudinal direction of the electrode tab (300), or
- a plurality of zigzag incision lines (313) formed in a longitudinal direction of the electrode tab (300), or
- a plurality of wavy incision lines (313) formed in a longitudinal direction of the electrode tab (300).

2. The battery cell according to claim 1, wherein the buffer portion (310) has two second break lines (312) disposed at each of opposite edges of the buffer portion (310), respectively, in a lateral direction of the buffer portion (310).

3. The battery cell according to claim 1, wherein the buffer portion (310) is configured such that:
a part of each of opposite edges of the buffer portion (310) in a lateral direction thereof is incised in a zigzag shape; and
a plurality of first zigzag break lines (311) is formed in a longitudinal direction of the electrode tab (300).

4. The battery cell according to claim 1, wherein the buffer portion (310) is configured such that:
a part of each of opposite edges of the buffer portion (310) in a lateral direction thereof is incised in a wavy shape; and
a plurality of first wavy break lines (311) is formed in a longitudinal direction of the electrode tab (300).

5. The battery cell according to claim 1, wherein the buffer portion (310) is configured such that:
a part of each of opposite edges of the buffer portion (310) in a lateral direction thereof is incised in a zigzag shape; and
a plurality of zigzag incision lines (313) is formed in a longitudinal direction of the electrode tab (300).

6. The battery cell according to claim 1, wherein the buffer portion (310) is configured such that:
a part of each of opposite edges of the buffer portion (310) in a lateral direction thereof is incised in a wavy shape; and
a plurality of wavy incision lines (313) is formed in a longitudinal direction of the electrode tab (300).

7. The battery cell according to claim 1, wherein the buffer portion (310) does not overlap the insulative film (500) on a vertical line.

8. A battery module comprising the battery cell according to claim 1.

9. A battery pack comprising the battery module according to claim 8.

## Patentansprüche

1. Batteriezelle, umfassend:
ein Gehäuse (100) mit einer laminierten Schichtstruktur;
eine Elektrodenanordnung (200), welche in dem Gehäuse (100) aufgenommen ist;
einen Elektrodenstreifen (300), welcher an einer Seitenfläche der Elektrodenanordnung (200) angeordnet ist;
eine Elektrodenleitung (400), deren eine Seite mit dem Elektrodenstreifen (300) verbunden ist und deren andere Seite aus dem Gehäuse (100) herausragt; und
isolierende Folien (500), welche jeweils an einer oberen Fläche und einer unteren Fläche der Elektrodenleitung (400) angeordnet sind,
wobei der Elektrodenstreifen (300) einen Pufferabschnitt (310) davon umfasst, wobei eine Länge des Pufferabschnitts einstellbar ist,
wobei der Pufferabschnitt (310) zwischen einem Verbindungsabschnitt (W) des Elektrodenstreifens (300) und der Elektrodenanordnung (200) angeordnet ist,
**dadurch gekennzeichnet, dass** der Pufferabschnitt (310) aufweist:
- eine Mehrzahl von ersten Zickzack-Bruchlinien (311), welche in einer Längsrichtung des Elektrodenstreifens (300) ausgebildet sind, oder
- eine Mehrzahl von ersten wellenförmigen Bruchlinien (311), welche in einer Längsrichtung des Elektrodenstreifens (300) ausgebildet sind, oder
- eine Mehrzahl von Zickzack-Einschnittlinien (313), welche in einer Längsrichtung des Elektrodenstreifens (300) ausgebildet sind, oder
- eine Mehrzahl von wellenförmigen Einschnittlinien (313), welche in einer Längsrichtung des Elektrodenstreifens (300) ausgebildet sind.

2. Batteriezelle nach Anspruch 1, wobei der Pufferabschnitt (310) zwei zweite Bruchlinien (312) aufweist, welche jeweils an jedem von entgegengesetzten Rändern des Pufferabschnitts (310) in einer lateralen Richtung des Pufferabschnitts (310) angeordnet sind.

3. Batteriezelle nach Anspruch 1, wobei der Pufferabschnitt (310) derart eingerichtet ist, dass:
ein Teil von jedem von entgegengesetzten Rändern des Pufferabschnitts (310) in einer lateraler Richtung davon in einer Zickzackform eingeschnitten ist; und
eine Mehrzahl von ersten Zickzack-Bruchlinien (311) in einer Längsrichtung des Elektrodenstreifens (300) ausgebildet ist.

4. Batteriezelle nach Anspruch 1, wobei der Pufferabschnitt (310) derart eingerichtet ist, dass:
ein Teil von jedem von entgegengesetzten Rändern des Pufferabschnitts (310) in einer lateraler Richtung davon in einer wellenförmigen Form eingeschnitten ist; und
eine Mehrzahl von ersten wellenförmigen Bruchlinien (311) in einer Längsrichtung des Elektrodenstreifens (300) ausgebildet ist.

5. Batteriezelle nach Anspruch 1, wobei der Pufferabschnitt (310) derart eingerichtet ist, dass:
ein Teil von jedem von entgegengesetzten Rändern des Pufferabschnitts (310) in einer lateraler Richtung davon in einer Zickzackform eingeschnitten ist; und
eine Mehrzahl von Zickzack-Einschnittlinien (313) in einer Längsrichtung des Elektrodenstreifens (300) ausgebildet ist.

6. Batteriezelle nach Anspruch 1, wobei der Pufferabschnitt (310) derart eingerichtet ist, dass:
ein Teil von jedem von entgegengesetzten Rändern des Pufferabschnitts (310) in einer lateraler Richtung davon in einer wellenförmigen Form eingeschnitten ist; und
eine Mehrzahl von wellenförmigen Einschnittlinien (313) in einer Längsrichtung des Elektrodenstreifens (300) ausgebildet ist.

7. Batteriezelle nach Anspruch 1, wobei der Pufferabschnitt (310) nicht mit der Isolierfolie (500) auf einer vertikalen Linie überlappt.

8. Batteriemodul, umfassend die Batteriezelle nach Anspruch 1.

9. Batteriepack, umfassend das Batteriemodul nach Anspruch 8.

## Revendications

1. Élément de batterie comprenant :
un boîtier (100) présentant une structure de feuilles stratifiées ;
un ensemble électrode (200) reçu dans le boîtier (100) ;
une languette d'électrode (300) située sur une surface latérale de l'ensemble électrode (200) ;
un fil d'électrode (400) ayant un côté connecté à la languette d'électrode (300) et l'autre côté faisant saillie hors du boîtier (100) ; et
des films isolants (500) disposés sur chacune d'une surface supérieure et d'une surface inférieure du fil d'électrode (400),
dans lequel la languette d'électrode (300) comporte une partie tampon (310), une longueur de la partie tampon étant réglable,
dans lequel la partie tampon (310) est située entre une partie de connexion (W) de la languette d'électrode (300) et l'ensemble électrode (200),
**caractérisé en ce que**
la partie tampon (310) présente :
- une pluralité de premières lignes de rupture en zigzag (311) formées dans une direction longitudinale de la languette d'électrode (300), ou
- une pluralité de premières lignes de rupture ondulées (311) formées dans une direction longitudinale de la languette d'électrode (300), ou
- une pluralité de lignes d'incision en zigzag (313) formées dans une direction longitudinale de la languette d'électrode (300), ou
- une pluralité de lignes d'incision ondulées (313) formées dans une direction longitudinale de la languette d'électrode (300).

2. Élément de batterie selon la revendication 1, dans lequel la partie tampon (310) présente deux deuxièmes lignes de rupture (312) disposées respectivement sur chacun de bords opposés de la partie tampon (310), dans une direction latérale de la partie tampon (310).

3. Élément de batterie selon la revendication 1, dans lequel la partie tampon (310) est configurée de sorte que :
une partie de chacun de bords opposés de la partie tampon (310) dans une direction latérale de celle-ci est incisée en une forme de zigzag ; et
une pluralité de premières lignes de rupture en zigzag (311) est formée dans une direction longitudinale de la languette d'électrode (300).

4. Élément de batterie selon la revendication 1, dans lequel la partie tampon (310) est configurée de sorte que :
une partie de chacun de bords opposés de la partie tampon (310) dans une direction latérale de celle-ci est incisée en une forme ondulée ; et
une pluralité de premières lignes de rupture ondulées (311) est formée dans une direction longitudinale de la languette d'électrode (300).

5. Élément de batterie selon la revendication 1, dans lequel la partie tampon (310) est configurée de sorte que :
une partie de chacun de bords opposés de la partie tampon (310) dans une direction latérale de celle-ci est incisée en une forme de zigzag ; et
une pluralité de lignes d'incision en zigzag (313) est formée dans une direction longitudinale de la languette d'électrode (300).

6. Élément de batterie selon la revendication 1, dans lequel la partie tampon (310) est configurée de sorte que :
une partie de chacun de bords opposés de la partie tampon (310) dans une direction latérale de celle-ci est incisée en une forme ondulée ; et
une pluralité de lignes d'incision ondulées (313) est formée dans une direction longitudinale de la languette d'électrode (300).

7. Élément de batterie selon la revendication 1, dans lequel la partie tampon (310) ne chevauche pas le film isolant (500) sur une ligne verticale.

8. Module de batterie comprenant l'élément de batterie selon la revendication 1.

9. Bloc-batterie comprenant le module de batterie selon la revendication 8.
